# EUROPÄISCHE PATENTANMELDUNG

(11) **EP 2 320 148 A2**
(43) Veröffentlichungstag der Anmeldung: **11.05.2011**
(21) Anmeldenummer: 10013530.0
(22) Anmeldetag: 12.10.2010
(51) Int. Cl.: F24D 19/10, F24D 3/10, F24H 9/12

(54) **Solarthermische Anlage mit wenigstens einem Kollektor für Sonnenwärme**

(30) Priorität: 07.11.2009 DE 202009015198 U
(71) Anmelder: PAW GmbH & Co. KG, 31789 Hameln (DE)
(72) Erfinder: Pommerening, Marc, Dipl.-Ing., 31789 Hameln (DE)
(74) Vertreter: Jabbusch, Matthias

(57) **Zusammenfassung**

Bei einer solarthermischen Anlage mit wenigstens einem Kollektor für Sonnenwärme und mit wenigstens einem Verbraucher der Sonnenwärme, wobei Kollektor und Verbraucher mit einem Leitungssystem für ein Wärmeträgermedium miteinander verbunden sind und wobei in das Leitungssystem zumindest eine Förderpumpe für das Wärmeträgermedium eingesetzt ist, ist vorgesehen, dass in Fließrichtung vor der Pumpe von der vom Kollektor zum Verbraucher verlaufenden Vorlaufleitung wenigstens eine Abzweigungsleitung abzweigt und in die vom Verbraucher zum Kollektor verlaufende Rücklaufleitung einmündet und dass der Abzweigungsleitung zumindest ein Leitungssperrelement zugeordnet ist.

Bei dieser solarthermischen Anlage ist mit geringem apparativem Aufwand ein ausreichender Schutz der Armaturen und der folgenden Einrichtungen vor zu hohen Temperaturen des Wärmeträgermediums gewährleistet.

## Beschreibung

Die Erfindung betrifft eine solarthermische Anlage mit wenigstens einem Kollektor für Sonnenwärme und mit wenigstens einem Verbraucher der Sonnenwärme, wobei Kollektor und Verbraucher mit einem Leitungssystem für ein Wärmeträgermedium miteinander verbunden sind und wobei in das Leitungssystem zumindest eine Förderpumpe für das Wärmeträgermedium eingesetzt ist.

Solarthermische Anlagen werden zur Erwärmung von Flüssigkeiten, insbesondere von Wasser, genutzt. Sie weisen ein Wärmeträgermedium auf, das einer Erwärmung durch Sonnenstrahlung ausgesetzt wird. Dazu verfügen solarthermische Anlagen über Kollektoren, welche z.B. auf geneigten Dachflächen der Sonne ausgesetzt werden und durch welche das Wärmeträgermedium geführt wird.

Weiterhin weisen solarthermische Anlagen häufig einen Speicher für das zu erwärmende Nutzwasser auf. Diese Speicher sind mit einer Flüssigkeitsinstallation verbunden, in welcher die erwärmte Flüssigkeit Verbrauchern zugeführt wird. Der Speicher ist regelmäßig in einem Keller oder auf einem Dachboden angeordnet, Speicher und Kollektor sind mit dem Leitungssystem wärmeträgermediumleitend miteinander verbunden.

Über diese Leitungen wird ein Kreislauf ausgebildet. Vom Kollektor führt ein Vorlauf in Richtung Speicher, vom Speicher ein Rücklauf wieder in Richtung Kollektor. Im Zuge dieses Kreislaufes sind in die Rohrleitungen Ventile, Armaturen, Anzeigeinstrumente und dergleichen Apparaturen eingesetzt. Insbesondere im Vorlauf können diese Armaturen hohen Temperaturen durch das Wärmeträgermedium ausgesetzt sein. Dieses erreicht bei intensiver Sonneneinstrahlung im Sommer hohe Temperaturen über 100°C, insbesondere dann, wenn Anlagenteile unmittelbar unterhalb einer Dachfläche angeordnet sind. Eine Gefährdung der Armaturen ist durch diese hohen Temperaturen ausgebildet. Auch Dichtungen werden durch das heiße Medium belastet, so dass aufgrund der hohen Temperaturen Beschädigungen dieser Bauteile auftreten können. Darüber hinaus können Personenschäden durch Verbrühungen auftreten, wenn aufgrund der Dampfbildung heiße Temperaturen in den Wärmetauscher eintreten.

Der Erfindung liegt die Aufgabe zugrunde, eine solarthermische Anlage der eingangs genannten Gattung aufzuzeigen, mit der mit geringerem apparativen Aufwand ein ausreichender Schutz der Armaturen und der folgenden Einrichtungen vor zu hohen Temperaturen des Wärmeträgermediums gewährleistet ist.

Diese Aufgabe ist erfindungsgemäß dadurch gelöst, dass in Fließrichtung vor der Pumpe von der vom Kollektor zum Verbraucher verlaufenden Vorlaufleitung wenigstens eine Abzweigungsleitung abzweigt und in die vom Verbraucher zum Kollektor verlaufende Rücklaufleitung und dass der Abzweigungsleitung zumindest ein Leitungssperrelement zugeordnet ist.

Bei der erfindungsgemäßen solarthermischen Anlage werden wärmeempfindliche Armaturen und andere Elemente dadurch geschützt, dass ihnen ein zu heißes Wärmeträgermedium nicht weiter zugeführt wird. Das Wärmeträgermedium wird aus der Vorlaufleitung direkt in die Rücklaufleitung überführt, dazu ist erfindungsgemäß die Abzweigungsleitung mit dem Leitungssperrelement vorgesehen.

Wird durch einen Sensor oder auf andere geeignete Weise festgestellt, dass die Temperatur des Wärmeträgermediums zu hoch ist, wird das Leitungssperrelement in der Abzweigungsleitung geöffnet, damit das heiße Wärmeträgermedium durch die Abzweigungsleitung hindurch in die Rücklaufleitung überführt wird. Nimmt die Temperatur des Wärmeträgermediums anschließend wieder ab, kann das Leitungssperrelement die Abzweigungsleitung wieder verschließen und das Wärmeträgermedium weiter durch die Vorlaufleitung den Armaturen und dem Speicher zugeführt werden.

Für die Zeit des Umleitens des Wärmeträgermediums in die Abzweigungsleitung kann durch eine geeignete Steuerung der Betrieb der Pumpe eingestellt werden.

Nach einer Weiterbildung der Erfindung kann vorgesehen sein, dass die Abzweigungsleitung zusätzlich in wenigstens ein Ausgleichsgefäß einmündet. Durch diese Maßnahme ist sichergestellt, dass für das heiße Wärmeträgermedium genug Raum vorhanden ist, um es zunächst aufzunehmen und anschließend abkühlen zu lassen.

Eine nächste Weiterbildung der Erfindung sieht vor, dass in der Vorlaufleitung in Fließrichtung nach Abzweigung der Abzweigungsleitung und vor der Pumpe ein Leitungsschließelement angeordnet ist. Damit das heiße Wärmeträgermedium vollständig in die Abzweigungsleitung in Richtung Rücklaufleitung bzw. Ausgleichsgefäß geführt wird, ist die Vorlaufleitung zu verschließen. Dazu dient das Leitungsschließelement. Dieses ist in Fließrichtung noch vor der Pumpe angeordnet, um auch die Pumpe vor dem heißen Wärmeträgermedium zu schützen. Ein entsprechendes Leitungsschließelement kann ergänzend auch in der Rücklaufleitung vorgesehen sein.

Zur konstruktiven Vereinfachung der erfindungsgemäßen Anlage sieht eine Weiterbildung der Erfindung vor, dass das Leitungssperrelement der Abzweigungsleitung und das Leitungsschließelement der Vorlaufleitung in einem Gehäuse angeordnet sind. Beide Verschlusselemente sind im gleichen Gehäuse angeordnet, so dass sich eine kompakte Bauform ergibt. Das Leitungsschließelement ist zudem dem Leitungssperrelement der Abzweigungsleitung direkt nachgeordnet, so dass keine Staustrecke für das heiße Wärmeträgermedium entsteht. Das Gehäuse ist beispielsweise in die Vorlaufleitung integriert.

Das Gehäuse für Leitungssperrelement und Leitungsschließelement weist Gehäusewandungen auf. Hier kann vorgesehen sein, dass in den Gehäusewandungen Durchbrüche für den Eintritt des Mediums in die Abzweigungsleitung und in die weitere Vorlaufleitung angeordnet sind und das im Gehäuse ein Ventil zum Öffnen und Schließen der Durchbrüche angeordnet ist. Das Medium tritt vom Kollektor kommend durch einen Durchbruch in das Gehäuse ein, anschließend kann es durch einen weiteren Durchbruch weiter in der Vorlaufleitung fließen oder bei entsprechendem Verschließen der Vorlaufleitung und Öffnen der Abzweigungsleitung durch den alternativen Durchbruch in die Abzweigungsleitung eintreten. Für beide Leitungen dient vorzugsweise ein und dasselbe Ventil, insbesondere dann, wenn die Durchbrüche winkelig zueinander stehen. Das Ventil kann dann ein bewegliches Schließbauteil haben, das in zwei voneinander verschiedenen Bewegungspositionen jeweils einen Durchbruch verschließt und den anderen Durchbruch freigibt. Mit Hilfe des Ventils kann somit ein Fließen des Wärmeträgermediums in den einen oder anderen Durchbruch freigeschaltet bzw. blockiert werden.

Dem Schließbauteil ist vorzugsweise ein Bewegungsantrieb, beispielsweise ein elektrischer Antrieb, zugeordnet. Dieser Bewegungsantrieb ist mit einem geeigneten Sensor verschaltet, um sein Bewegen bei Auftreten zu hoher Wärmeträgermediumtemperaturen auszulösen. Zur Vereinfachung kann dabei vorgesehen sein, dass der Bewegungsantrieb ein sich bei Vorliegen der bestimmten Temperatur ausdehnendes Material ist. Bei Einsatz dieses Materials ist ein externer Sensor sowie ein weiterer Antrieb, beispielsweise durch einen Schrittmotor, nicht erforderlich, das ausdehnende Material stellt Temperaturen selbst fest und reagiert bei zu hohen Temperaturen durch eine Ausdehnung. Diese Ausdehnung wird bei der erfindungsgemäßen Anlage für eine Bewegung des Schließbauteils genutzt.

Das sich bei Vorliegen einer bestimmten Temperatur ausdehnende Material kann eine Ausdehnungsschwelle von etwa 105°C haben. Damit werden die Pumpe sowie weitere Bauteile der solarthermischen Anlage gegen hohe Temperaturen deutlich über 100°C geschützt.

Konstruktiv kann vorgesehen sein, dass das sich bei einer bestimmten Temperatur ausdehnende Material in eine Buchse eingesetzt ist und das Schließbauteil ein von dieser Buchse beaufschlagter Kolben ist. Der Kolben wird durch das Material verschoben. Sinkt die Temperatur, zieht sich das Material wieder zusammen. Um dann eine Rückführung des Kolbens zu erreichen, ist nach einer Weiterbildung der Erfindung von außen gegen das Schließbauteil eine Rückführkraft angelegt, beispielsweise durch eine auf dem Schließbauteil aufliegende Feder.

Weiterhin kann vorgesehen sein, dass dem Gehäuse ein Lagesensor für das Schließbauteil zugeordnet ist. Dieser Lagesensor, beispielsweise ein Hall-Sensor für ein mit einem Dauermagnet ausgerüstetes Schließbauteil, stellt die genaue Lage des Schließbauteils fest. Diese Information kann dann einer Steuerung zugeleitet werden.

Durch die erfindungsgemäße Anlage wird ein einfacher und preiswerter Schutz für wärmeempfindliche Bauteile im Kreislauf einer solarthermischen Anlage erreicht. Bei Einsetzen eines sich bei Wärme ausdehnenden Materials fallen zudem keine laufenden Energiekosten für den Betrieb des Leitungssperrelementes und Leitungsschließelementes an. Gehen die Temperaturen des Wärmeträgermediums wieder zurück, wird die Abzweigungsleitung wieder verschlossen und der normale Kreislauf wieder geöffnet. Ein Ausbau des damit ausgebildeten Stagnationsventils ist nicht erforderlich. Gerade im Sommer ist das Öffnen der Abzweigungsleitung häufig erforderlich, da die Temperatur des Wärmerträgermediums regelmäßig über die Temperatur von 100°C steigt.

Ein Ausführungsbeispiel der Erfindung, aus dem sich weitere erfinderische Merkmale ergeben, ist in der Zeichnung dargestellt. Es zeigen:
- Fig. 1:: eine Seitenansicht eines Bauteils einer solarthermischen Anlage,
- Fig. 2 und 3:: Schnittansichten des Bauteils gemäß Figur 1 in zwei voneinander verschiedenen Betriebszuständen und
- Fig. 4:: eine schematische Gesamtansicht der erfindungsgemäßen solarthermischen Anlage.

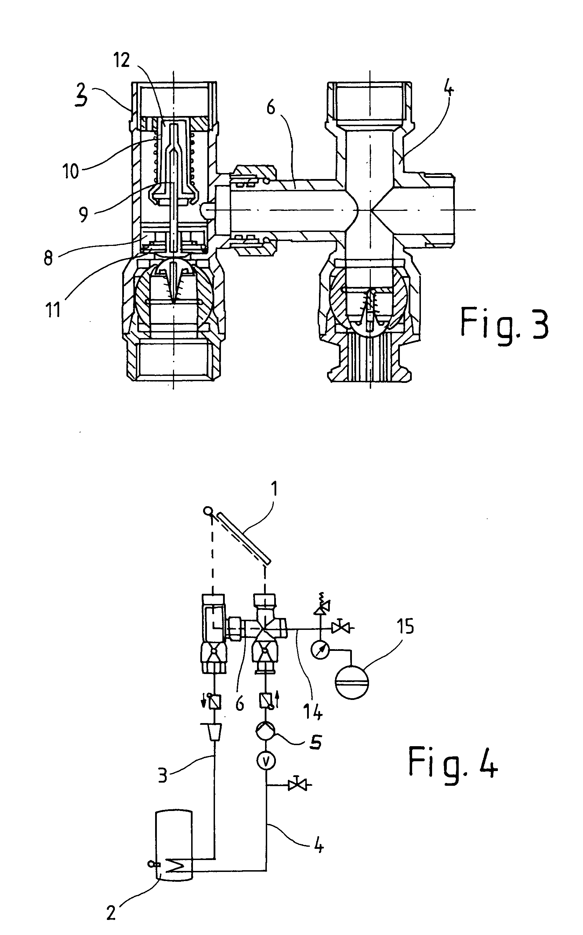

Die solarthermische Anlage in Figur 4 weist einen beispielsweise auf einer Dachfläche anzuordnenden Kollektor 1 auf. Als Verbraucher für mit dem Kollektor 1 gesammelte Sonnenwärme dient ein Speicher 2. Kollektor 1 und Speicher 2 sind über eine Vorlaufleitung 3 sowie eine Rücklaufleitung 4 wärmeträgermediumleitend miteinander verbunden. In die Vorlaufleitung 3 sowie in die Rücklaufleitung 4 sind eine Pumpe 5 sowie weitere Bauteile eingesetzt.

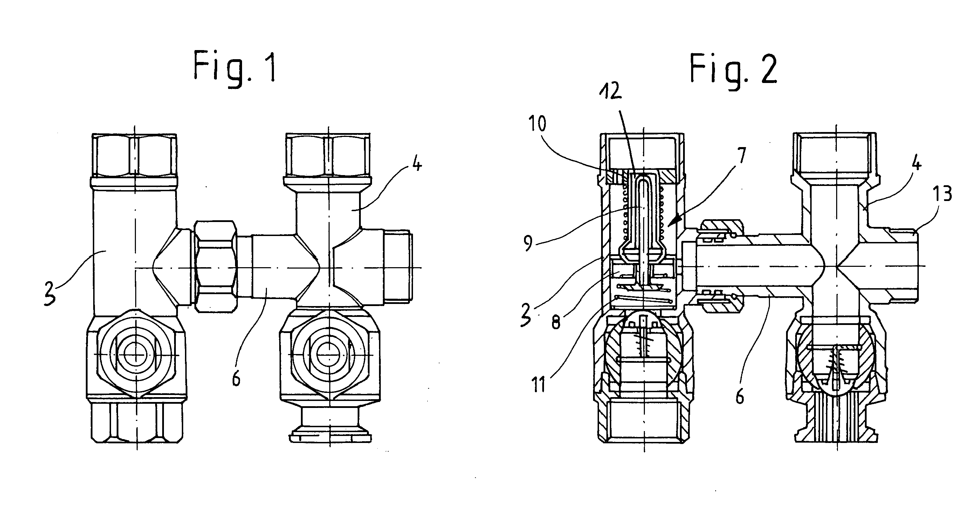

Erfindungsgemäß ist eine Abzweigungsleitung 6 vorgesehen, welche in Fließrichtung vor der Pumpe 5 von der Vorlaufleitung 3 abzweigt. Die Abzweigungsleitung 6 ist in das in Figuren 1 bis 3 dargestellte Bauteil integriert.

Figur 1 zeigt dieses Bauteil mit Vorlaufleitung 3 und Rücklaufleitung 4. Zwischen beiden Leitungen 3, 4 ist eine Verbindung durch die Abzweigungsleitung 6 ausgebildet.

Figur 2 zeigt, dass die Abzweigungsleitung 6 frei ist, in der Vorlaufleitung 3 jedoch ein Ventil 7 angeordnet ist. Das Ventil 7 weist ein als Kolben ausgebildetes Schließbauteil 8 auf, das mit einer Kolbenstange 9 in eine Buchse 10 eingeführt ist. In Figur 2 wird der Kolben 8 mit einer Spiralfeder 11 gegen die Buchse 10 geführt, dabei verschließt der Kolben 8 den Eintritt in die Abzweigungsleitung 6. Das Wärmeträgermedium kann durch die Vorlaufleitung 3 hindurchfließen.

Figur 3 zeigt den Fall, dass das Wärmeträgermedium eine zu hohe Temperatur erreicht hat. In diesem Fall dehnt sich ein in der Buchse 10 angeordnetes Material 12 aus. Das Material 12 ist ein sich bei Vorliegen einer bestimmten Temperatur ausdehnendes Material. Mit dem Material 12 wird die Kolbenstange 9 aus der Buchse 10 teilweise herausgeführt, die Kolbenstange 9 drückt dabei den Kolben 8 gegen die Kraft der Feder 11 in Richtung Feder 11. Ein Durchbruch zum Eintritt des Wärmeträgermediums aus der Vorlaufleitung 3 in die Abzweigungsleitung 6 ist frei. Das Medium kann durch die Abzweigungsleitung 6 in die Rücklaufleitung 4 geführt werden. Diese Führung ist in Figur 4 mit einer gestrichelten Linie dargestellt. Über einen Auslass 13 im Bauteil auf der Seite der Rücklaufleitung 4 kann erhitztes Medium zudem über eine Leitung 14 (Figur 4) in ein Ausgleichsgefäß 15 geführt werden.

Vorlaufleitung 3 und Rücklaufleitung 4 sind in dem in Figuren 1 bis 3 dargestellten Bauteil relativ nah einander zugeordnet. Bei solarthermischen Anlagen werden die Leitungen aber durchaus in einem derartigen Abstand verlegt, so dass das Bauteil als Stagnationsarmatur ohne großen Aufwand in Vorlaufleitung 3 und Rücklaufleitung 4 eingebaut werden kann. Das Bauteil weist die erforderlichen Systemanschlüsse auf. Die solarthermische Anlage kann auch Pufferspeicher umfassen, bei denen eine thermisch gesteuerte Schicht-Einspeisung vorgenommen wird. Das heißere Wärmeträgermedium kann dort in einen höheren Speichenanschluss geleitet werden.

## Patentansprüche

1. Solarthermische Anlage mit wenigstens einem Kollektor für Sonnenwärme und mit wenigstens einem Verbraucher der Sonnenwärme, wobei Kollektor und Verbraucher mit einem Leitungssystem für ein Wärmeträgermedium miteinander verbunden sind und wobei in das Leitungssystem zumindest eine Förderpumpe für das Wärmeträgermedium eingesetzt ist,
**dadurch gekennzeichnet,**
**dass** in Fließrichtung vor der Pumpe (5) von der vom Kollektor (1) zum Verbraucher verlaufenden Vorlaufleitung (3) wenigstens eine Abzweigungsleitung (6) abzweigt und in die vom Verbraucher zum Kollektor (1) verlaufende Rücklaufleitung (4) einmündet und dass der Abzweigungsleitung (6) zumindest ein Leitungssperrelement zugeordnet ist.

2. Anlage nach Anspruch 1, **dadurch gekennzeichnet, dass** die Abzweigungsleitung (6) zusätzlich in wenigstens ein Ausgleichsgefäß (15) einmündet.

3. Anlage nach Anspruch 1 oder 2, **dadurch gekennzeichnet, dass** in der Vorlaufleitung (3) in Fließrichtung nach Abzweigung der Abzweigungsleitung (6) und vor der Pumpe (5) ein Leitungsschließelement angeordnet ist.

4. Anlage nach Anspruch 3, **dadurch gekennzeichnet, dass** das Leitungssperrelement der Abzweigungsleitung (6) und das Leitungsschließelement der Vorlaufleitung (3) in einem gemeinsamen Gehäuse angeordnet sind.

5. Anlage nach Anspruch 4, **dadurch gekennzeichnet, dass** in den Wandungen des Gehäuses Durchbrüche für den Eintritt des Mediums in die Abzweigungsleitung (6) und die Vorlaufleitung (3) angeordnet sind und dass im Gehäuse ein Ventil (7) zum Öffnen und Schließen der Durchbrüche angeordnet ist.

6. Anlage nach Anspruch 5, **dadurch gekennzeichnet, dass** die Durchbrüche winkelig zueinanderstehen und mit ein und demselben Ventil (7) zu öffnen bzw. zu schließen sind.

7. Anlage nach Anspruch 6, **dadurch gekennzeichnet, dass** das Ventil ein bewegliches Schließbauteil (8) hat, das in zwei voneinander verschiedenen Bewegungspositionen jeweils einen Durchbruch verschließt.

8. Anlage nach Anspruch 7, **dadurch gekennzeichnet, dass** dem Schließbauteil (8) ein Bewegungsantrieb zugeordnet ist.

9. Anlage nach Anspruch 8, **dadurch gekennzeichnet, dass** der Bewegungsantrieb ein sich bei Vorliegen einer bestimmten Temperatur ausdehnendes Material (12) ist.

10. Anlage nach Anspruch 9, **dadurch gekennzeichnet, dass** ein Material (12) mit einer Ausdehnungsschwelle von ca. 105 °C eingesetzt ist.

11. Anlage nach Anspruch 9 oder 10, **dadurch gekennzeichnet, dass** das Material (12) in eine Buchse (10) eingesetzt ist und das Schließbauteil (8) ein von dieser Buchse (10) beaufschlagter Kolben ist.

12. Anlage nach Anspruch 7 bis 11, **dadurch gekennzeichnet, dass** von außen gegen das Schließbauteil (8) eine Rückführkraft angelegt ist.

13. Anlage nach Anspruch 12, **dadurch gekennzeichnet, dass** auf dem Schließbauteil (8) eine Feder (11) aufliegt.

14. Anlage nach einem der Ansprüche 7 bis 12, **dadurch gekennzeichnet, dass** dem Gehäuse ein Lagesensor für das Schließbauteil (8) zugeordnet ist.
